Europäisches Patentamt

European Patent Office

Office européen des brevets

(19)

(11) Publication number: **0 142 304**

**A1**

(12) **EUROPEAN PATENT APPLICATION**

(21) Application number: **84307316.4**

(22) Date of filing: **24.10.84**

(51) Int. Cl.⁴: **H 04 B 3/23**
**H 04 B 3/20**

(30) Priority: **25.10.83 IL 70046**

(43) Date of publication of application:
**22.05.85 Bulletin 85/21**

(84) Designated Contracting States:
**AT BE CH DE FR GB IT LI LU NL SE**

(71) Applicant: **ELECTRONICS CORPORATION OF ISRAEL LIMITED**
**88 Giborei Israel Street**
**Tel Aviv(IL)**

(72) Inventor: **Piasecki, Joshua**
**1 Smadar Street**
**Ramat-Gan(IL)**

(72) Inventor: **Zalitsky, Yeshayahu**
**17 Tel Haj**
**Raanana(IL)**

(74) Representative: **Pike, Harold John et al,**
**Abel & Imray Northumberland House 303-306 High Holborn**
**London, WC1V 7LH(GB)**

(54) Echo eliminator.

(57) Telecommunication apparatus comprising an echo canceller (250) operative to receive a received signal indication and operative to modify signal transmission in accordance with the received signal indication for echo cancellation, the echo canceller (250) being operative to provide a control output representative of residual echo in the transmitted signal, and a variable threshold echo suppressor (252) receiving the modified signal transmission from the echo canceller (250) and the control output and being operative to provide echo suppression in accordance with a threshold determined by the control output.

FIG. 4

# 1
## Echo Eliminator

The present invention relates to telecommunications apparatus generally and more particularly to circuitry for compensating for echoes, which is particularly suitable for use in Time Assignment Speech Interpolation (TASI) apparatus.

### BACKGROUND OF THE INVENTION

Time Assignment Speech Interpolation (TASI) apparatus is well known in the art. Its function, stated in general terms, is to exploit the fact that during a normal telephone conversation, information is being transmitted only about 35% of the time. TASI apparatus is operative to connect a subscriber to a transmission line only during those portions of a conversation when speech is actually present. During the other portions of the conversation, the transmission line is connected to another speaker, currently speaking in another conversation.

An embodiment of Time Assignment Speech Interpolation Apparatus which has gained wide market acceptance is described in applicant's published European Patent Application 79301917.5. Other types of TASI apparatus are described in U.S. Patents 4,147,896, 4,066,844, 4,048,447 among many others.

All TASI apparatus, as well as other long distance trunk apparatus, encounters problems as the result of echoes caused by signal returns at the four wire - two wire junction. In the worst case, these losses are of the order of about 6dB. While they may be as large as 30dB, they are normally in the range of 6 - 12 dB.

Conventionally, in order to overcome the problem of echoes resulting from signal returns from the hybrid, a syllabic echo suppressor is incorporated in the telecommunications apparatus. The echo suppressor operates to compare the received signal with the transmitted signal. If the transmitted signal exceeds the received signal, then it is assumed that the received signal does not comprise echo and the transmssion of the relevant syllable is permitted. If, however, the transmitted signal is less than the received signal, it is assumed that the received signal comprises an echo and the transmission of the relevant syllable is blocked. Echo suppression apparatus of this type is described in U.S. Patents: 3,673,355 , 3,823,275 , and 4,029,912.

A significant difficulty arises in the operation of echo suppression apparatus of the type described herein in the case of double talk, i.e. when both parties to the conversation speak simultaneously. In such a case, it often occurs that the speech transmission of the party furthest from the hybrid is blocked , since his transmission appears weaker than the received signal from the other party.

In recent years echo cancellers have been developed. Echo cancellers provide a more sophisticated solution to the problems of echo reduction than do echo suppressors and are operative to estimate the characteristic waveform of the received echo and to subtract it from the transmitted signal. Thus in the presence of a perceived echo, the entire transmission is not blocked but rather only that portion identified as resulting from the echo is removed.

A disadvantage in the use of echo cancellers lies in that the estimated echo is not exactly equal to the actual echo and the output still contains residual echo typically 24 dB below the initial echo signal. This residual echo is conventionally dealt with by the inclusion of a non-syllabic echo suppressor which is operative to block individual speech samples when the received signal exceeds the transmitted signal. The result of such processing is distortion of the speech waveform and degradation in speech quality.

A further problem in the use of echo cancellers lies in their complexity and thus in their limited mean time between failures. In the event that the echo canceller fails, no echo compensation is provided for the entire trunk, producing very low quality service.

## SUMMARY OF THE INVENTION

The present invention seeks to provide improved echo elimination apparatus.

There is thus provided in accordance with a preferred embodiment of the present invention echo elimination apparatus comprising echo canceller apparatus operative to receive a received signal indication and operative to modify a signal transmission in accordance with the received signal indication for echo cancellation, the echo canceller apparatus being operative to provide a control output representative of residual echo in the transmitted signal, and variable threshold echo suppressor apparatus receiving the modified signal transmission from the echo canceller apparatus and the control output and being operative to provide echo suppression in accordance with a threshold determined by the control output.

According to a preferred embdodiment of the present invention, the control output represents the operation state of the echo canceller.

Further in accordance with a preferred embodiment of the present invention, the variable threshold echo suppressor apparatus comprises comparator apparatus which is operative to block transmission only when the received signal amplitude exceeds the transmitted signal by a selectable amount which is determined by the control output.

Additionally in accordance with a preferred embodiment of the present invention, the variable threshold echo suppressor comprises a syllabic echo suppressor.

## BRIEF DESCRIPTION OF THE DRAWINGS

The present invention will be understood and appreciated more fully from the following detailed description taken in conjunction with the drawings in which:

Fig. 1 is a general block diagram of a communications system including Time Assignment Speech Interpolation (TASI) Apparatus which may incorporate the present invention;

Fig. 2 is a block diagram of a TASI system with echo elimination circuitry constructed and operative in accordance with the present invention;

Fig. 3 is a detailed block diagram of a portion of the circuitry of Fig. 2 which incorporates the echo canceller;

Fig. 4 is a block diagram of a non-TASI communications link incorporating the circuitry of Fig. 3; and

Fig. 5 is a schematic diagram of part of the circuitry 0142304 of Fig. 3.

## DETAILED DESCRIPTION OF THE INVENTION

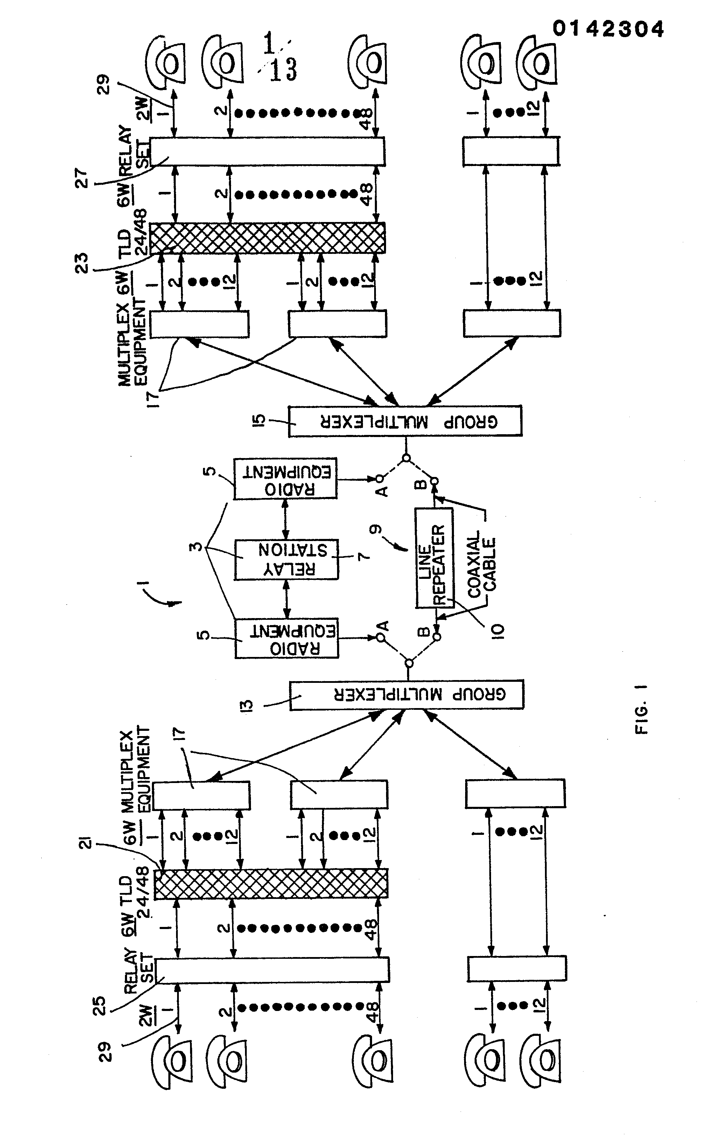

Reference is made to Fig. 1 which illustrates a communications system including time assignment speech interpolation (TASI) apparatus constructed and operative in accordance with an embodiment of the invention. The communications system comprises a transmission trunk 1 including a microwave radio portion 3 having a pair of transceivers 5 linked by relay apparatus 7. The transmission link may additionally or alternatively comprise a coaxial cable portion 9 which may operate in parallel to the microwave link and which is provided with suitable amplification apparatus 10.

At both ends of the transmission link 1 there are provided Frequency Division Multiplexers 13 and 15 of conventional construction and operation and each of which is connected to a plurality of carrier multiplexers 17 of conventional construction and operation, such as System 7 of Siemens. The total number of terminals of each of the carrier multiplexers 17 at each end of the transmission link represents the total number of communications channels available over the transmission link.

In the exemplary embodiment illustrated herein, TASI apparatus 21 and 23 is connected to each group of 24 terminals of the carrier multiplexers at respective ends of the link transmission trunk. Each TASI apparatus of the invention is also connected to a respective relay set 25, and 27, which is 0142304

connected, in turn, via suitable exchange equipment 29 including 4 wire to 2 wire hybrids, to 48 active subscriber lines.

It is well known that due to the presence of the imperfect termination at the 4-wire to 2 wire hybrids, signal returns occur, producing back echoes through the TASI system. The present invention deals with apparatus for eliminating the echoes arising from the  signal returns.

It is noted that the TASI apparatus of the present invention need not necessarily be associated with relay sets or with any other particular type of interconnecting or switching circuitry.  The term "telephone communication line" will be used hereinafter and in the claims to denote one of the, typically 48, lines which may carry signals, voice, or otherwise, which it is desired to communicate via one of the communication channels. The term "active subscriber line"  defined hereinabove refers to a telephone communication line which is associated with the use of a relay set.

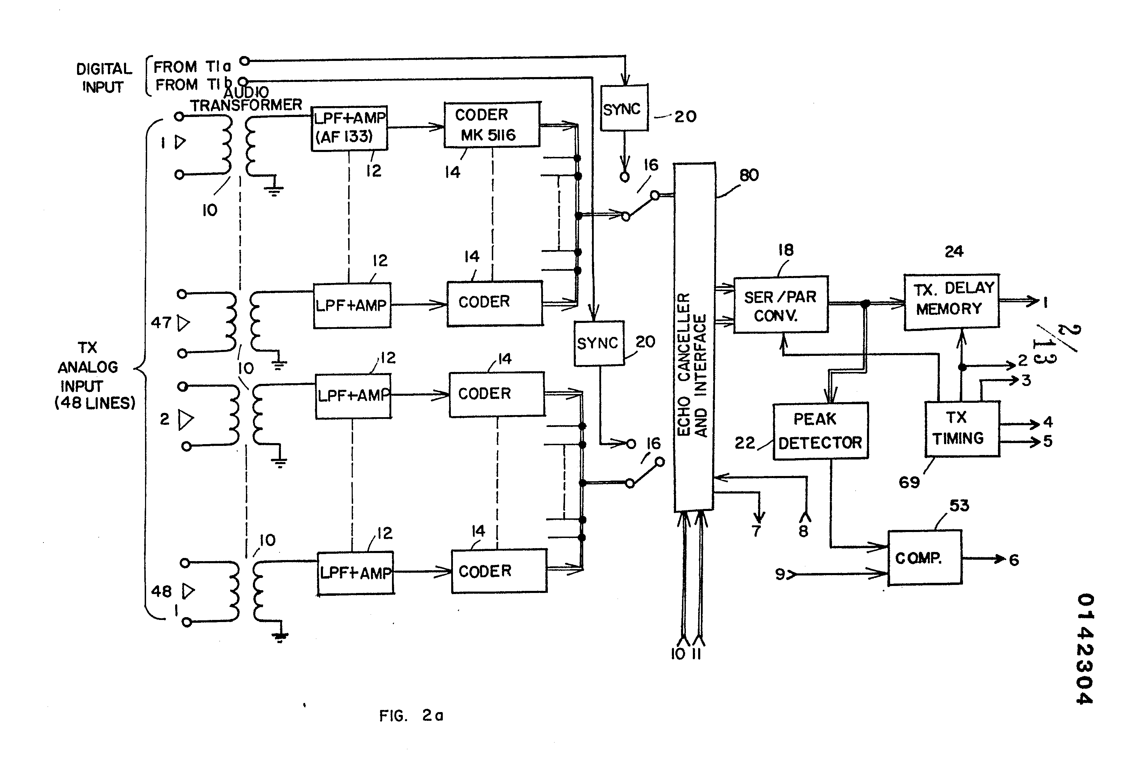

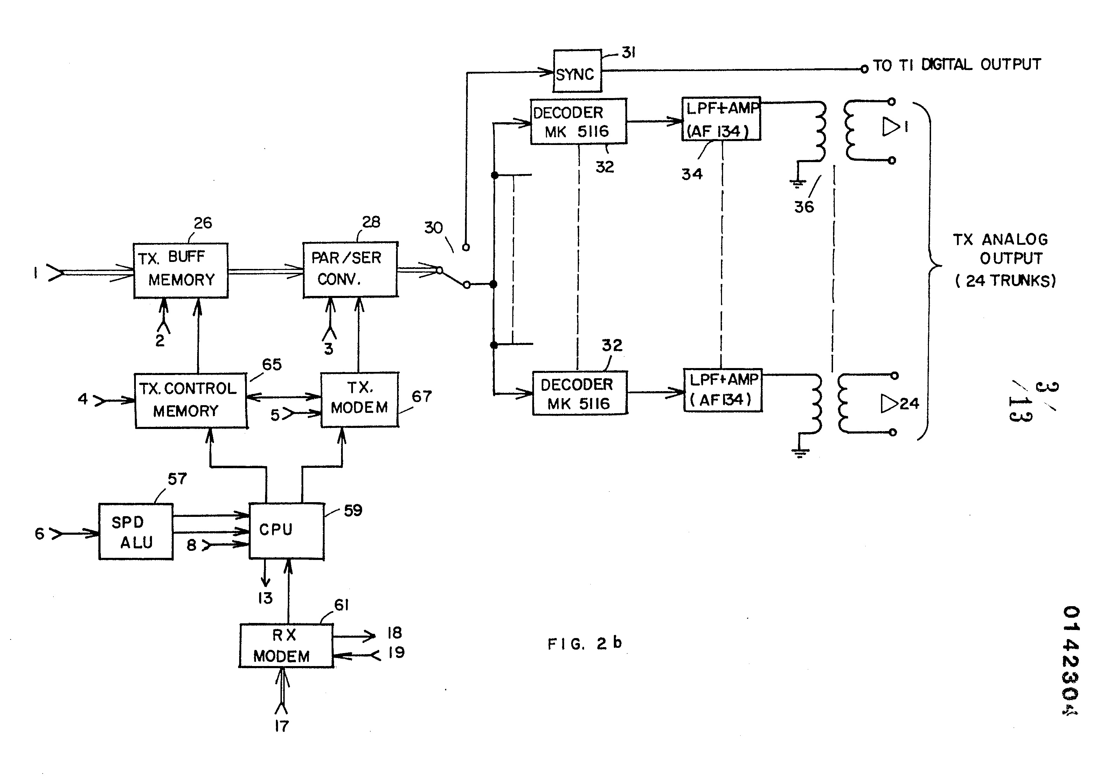

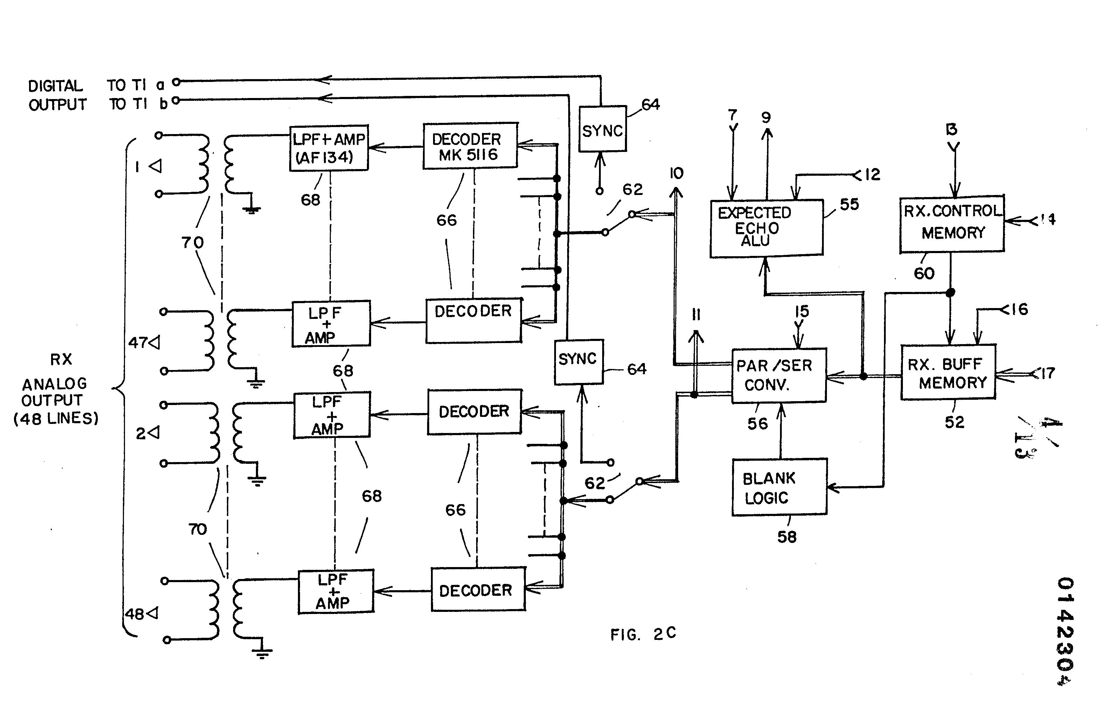

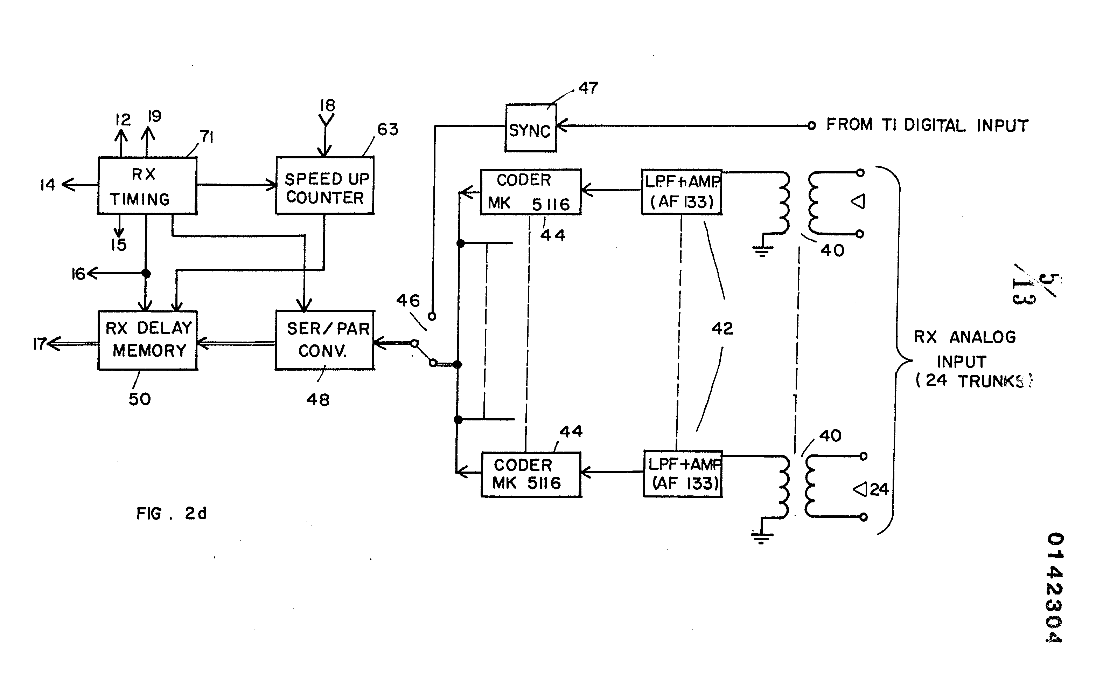

Referring now to Fig. 2 there is seen a block diagram illustration of a time assignment speech interpolation communications unit constructed and operative in accordance with an embodiment of the invention.  Forty-eight analog input lines are each connected to a relay set (not shown) and are received at respective inputs of 48 audio transformers 10.  The outputs of the audio transformers 10 are supplied, typically, to AF 133 (National)  low pass filters and amplifiers 12, also 48 in number.  The outputs of the low pass filters and amplifiers 12 are supplied to 48 coders 14 such as  MK 5116 coders (Mostek) which convert the audio inputs into 8 bit serial digital signals. The outputs of the 48 coders 14 are supplied, via a switch 16, to echo canceller circuitry 80. The outputs of echo canceller circuitry 80, which are the digital signals after echo cancellations, are connected to serial to parallel converter 18.

It is a particular feature of the embodiment of the invention illustrated herein that switch 16 is operative to input to the serial to parallel converter either the outputs from coders 14 or digital inputs such as a standard PCM (Pulse Code Modulation) output. Thus the versatility of the time assignment speech interpolation communications unit is greatly increased, enabling it to operate with analog or digital signal transmissions or a combination thereof.

Where digital outputs from standard PCM apparatus such as a T 1 trunk are received, the received digital signal is supplied to synchronization circuitry 20 and through the echo canceller 80 to the serial to parallel converter 18. The synchronization circuitry 20 is operative to process the normal 193 bit frame timing such that only the 192 information bits are dealt with by the circuitry that follows the serial to parallel converter, and the additional bit is used to define the signalling bit timing and is described later in detail.

The circuitry described above, comprising low pass filters and amplifiers 12 and coders 14 will be referred to hereinafter as coder circuitry, it being appreciated that coders 14 and decoders 66 described hereinafter are preferably embodied in a MK 5116 CODEC chip.

The output of serial to parallel converter 18 is 0142304 supplied to a peak detector 22 and to a transmitter delay memory 24, which are illustrated in respective Figs. 14 and 15 which will be described hereinafter. The operation of the transmitter delay memory 24 is entirely digital and provides a delay of 48 ms and supplies an output to a transmitter buffer memory 26, such as a Motorola 6810. The output of transmitter buffer memory 26 is supplied to a parallel to serial converter 28, whose output is provided via a switch 30 either to synchronization circuitry 31 or to 24 decoders 32, each embodied in a MK 5116 chip, depending on whether analog or digital signal transmissions are involved.

The output of each decoder is to an AF 134 low pass filter and amplifier 34. The output of each filter and amplifier 34 is supplied via an audio transformer 36 to one of 24 communications channels in the transmission trunk link. The output of synchronization circuitry 31 is supplied as a 193 bit digital output to a digital transmission trunk such as a T 1 trunk.

Considering now the received signals from the transmission trunk link received on the 24 communications channels, these are supplied via coder circuitry typically comprising 24 audio transformers 40, 24 AF 133 low pass filters and amplifiers 42 and 24 MK 5116 coders 44, embodied together with decoders 32 in MK 5116 CODEC chips, and via a switch 46 to a serial to parallel converter 48. The output of the serial to parallel converter 48 is supplied to a receiver delay memory 50 and thence to a receiver buffer memory 52.

Synchronization circuitry 47 receives a digital input such as standard PCM from the transmission trunk and operates similarly to synchronization circuitry 20. It is noted that switches 30 and 46 may be controlled together with switch 16 such that when digital information is being supplied, the coder and decoder circuitry is bypassed and the signals pass via the synchronization circuitry which deals with the 193'rd bit of the PCM format.

The output of receiver buffer memory 52 is supplied to a parallel to serial converter 56 which also receives an input from blanking logic circuitry 58 (Fig. 2) which operates in response to an output from a receiver control memory 60. The serial outputs of parallel to serial converter 56 are routed to echo canceller circuitry 80 to provide a receive reference signal for cancellation. The outputs of parallel to serial converter 56 are also supplied via a switch 62 either to digital outputs such as a standard PCM via synchronization circuitry 64 similar to synchronization circuitry 31, or alternatively to decoder circuitry comprising 48 MK 5116 decoders 66, mentioned above, each followed by an AF 134 low pass filter and amplifier 68 and an audio transformer 70. The outputs of the 48 audio transformers are supplied each to a line of a 48 line analog output which may interface with a relay set.

It is noted that in accordance with an alternative embodiment of the invention, switches 16, 30, 46 and 62 may be independently controlled so as to enable digital transmissions received from a telephone communication line to be transmitted along an analog trunk and vice versa. It is also appreciated that the telephone communication lines and the communication 0142304
channels may be selectably divided between analog and digital lines, as required by the intended use of the system. The proportion can be changed readily, should use requirements change over time.

The output of peak detector 22 is supplied to one input of a comparator 53 which also receives an input from Expected Echo Arithmetic Logic Unit 55. Unit 55 determines the threshold of comparator 53 in response to the output of the receiver buffer memory 52 which indicates the signal amplitude of the 48 telephone communication lines, and in response to the expected transhybrid loss command sent from CPU 59 via echo canceller circuitry 80. Unit 55 computes receive signal level and subtracts from it the expected trans-hybrid loss. CPU 59 communicates with echo canceller 80 and verifies its proper operation. When the CPU 59 detects malfunction of the echo canceller 80 for one or more telephone communication lines, it sends a command via echo canceller interface 80 to lower the expected trans-hybrid loss for that line in the expected echo ALU 55.

The output of comparator 53 is supplied to SPD Arithmetic Logic Unit circuitry 57, which will be described in detail hereinafter. The output of circuitry 57 is supplied to a Central Processing Unit 59, which will be described hereinafter in detail.

The output of the receiver delay memory 50 is supplied to a receiver modem 61, which in turn provides an output to the CPU 59. The receiver modem scans the delay memory 50 to detect received messages in the contents of memory 50 and to transfer the contents thereof to the CPU. The receiver modem operates in association with a speed up counter 63 which addresses the delay memory 50 during scanning thereof by the receiver modem.

In response to a change in the output of the SPD ALU circuitry 57, the CPU 59 provides control inputs to a transmit control memory 65. Memory 65 contains the data which defines which of the 48 telephone communication lines are coupled to which of the 24 communication channels. This information is defined by the dynamic assignment of communication channels to telephone communication lines and is indicated by an output of the control memory 65 to transmit buffer memory 26, which is selectably read in accordance with the output of the control memory 65.

The CPU also provides control inputs to a transmit modem 67 which indicates the contents of the message to be transmitted as well as the communication channel on which the message is to be transmitted. The message is transmitted by an output of the transmitter modem 67 to parallel-serial converter 28 in accordance with timing signals provided by transmitter timing circuitry 69.

Timing circuitry 69 provides an output to serial to parallel converter 18 and an output to parallel to serial converter 28 in addition to providing timing signals to transmitter modem 67, and providing timing signals to the transmitter delay memory 24 and the transmitter control memory 65 in order to synchronize the operation thereof.

The various elements of the transmitter circuitry 0142304 described hereinabove will be described hereinafter in greater detail with reference to detailed block diagrams and schematic illustrations.

It is noted that a variety of control functions are assigned to the CPU and appreciated that alternatively these control functions may be carried out by discrete dedicated circuitry. Simplicity of design and economy are achieved by use of the CPU as described herein.

Receiver control memory 60 is updated by inputs from the CPU 59 in response to messages received at the modem receiver 61. Receiver timing circuitry 71 provides an address to the receiver control memory 60 for governing the read/write cycle thereof in a sequential manner and also provides outputs to receiver buffer memory 52, receiver delay memory 50, speed up counter 63, parallel to serial converter 56, serial to parallel converter 48 and receiver modem 61, for synchronziing the operation thereof.

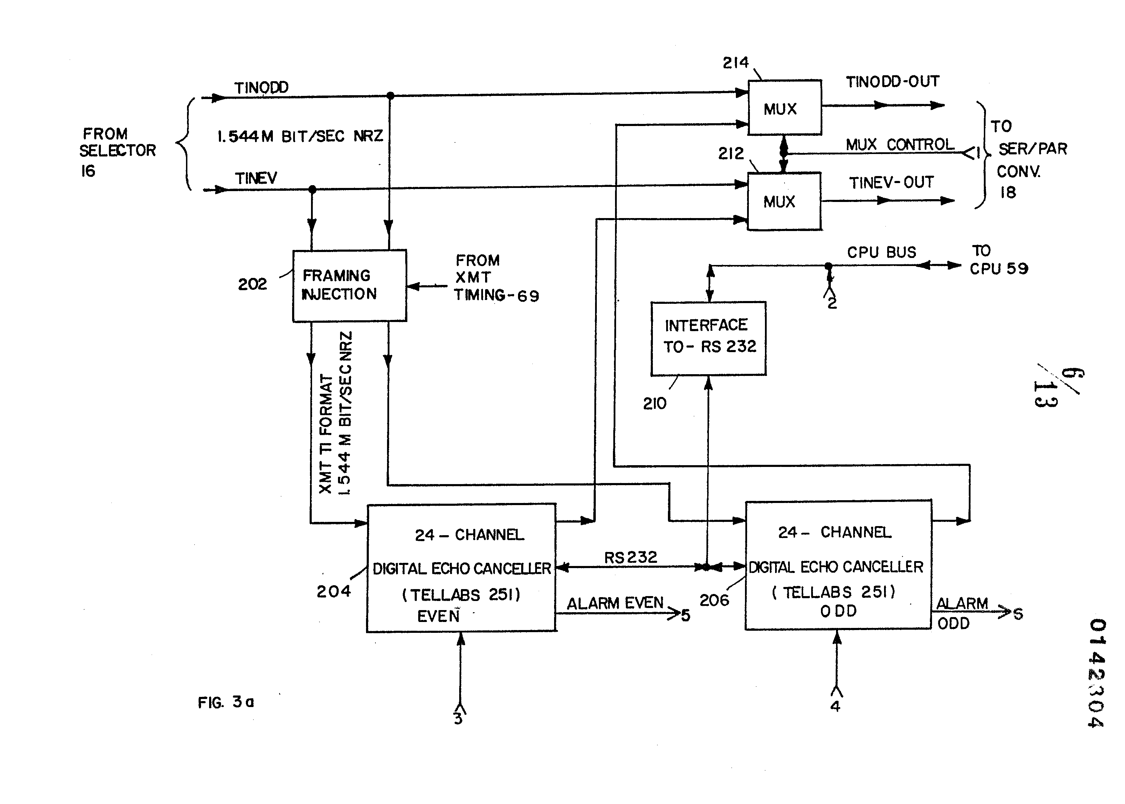

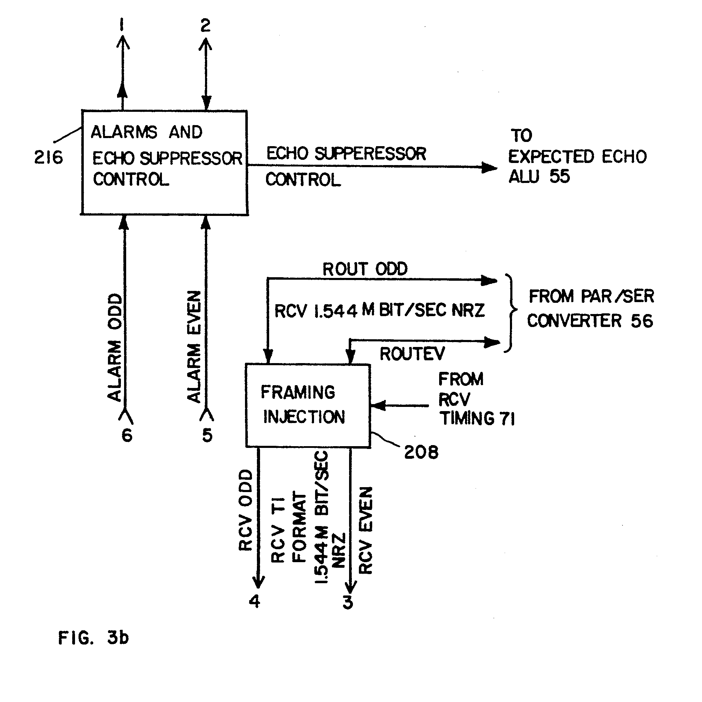

Reference is now made to Fig. 3 which illustrates in detail the echo canceller and interface 80. Input signals from communication lines are received via selector switch 16 in two digital bit streams. Each bit stream has a 1.544 Mbit/sec rate and conforms with the T-1 PCM format on the speech time slots and is represented in NRZ, i.e. non-return to zero, form. Each bit stream comprises 24 PCM coded communications lines signals, one bit stream including the signals of 24 odd numbered lines and the other bit stream including the signals of 24 even numbered lines. Both bit streams enter a framing injection unit 202 which is

## 13

operative to provide an indication of the framing sequence in the 193rd bit in each frame according to the T-1 format.

The even output of framing injection unit 202 is supplied to the transmit input of a 24 channel digital echo canceller 204 and the odd output enters the transmit input of a 24 channel digital echo canceller 206. Typically both digital echo cancellers are Model 251 manufactured by Tellabs ofLisle, Illinois, U.S.A..

Receive signals of 48 communications lines are provided also in two digital bit streams from parallel to serial converter 56. These two bit streams also have a 1.544 Mbit/sec rate, NRZ form and conform with the T-1 PCM format in the speech time slots. Both bit streams enter framing injection unit 208 which injects the framing sequence in the 193rd bit of each frame.

The even output of framing injection unit 208 enters the receive input of echo canceller 204 and the odd output of unit 208 enters the receive input of echo canceller 206. The echo cancelled transmit output of even echo canceller 204 is connected via multiplexer 212 to serial to parallel converter 18. In the same manner the odd transmit output of echo canceller 206 is connected via multiplexer 214 to serial to parallel converter 18.

The CPU-Central Processing Unit 59 communicates with both echo cancellers 204 and 206 via a RS 232 interface, indicated by reference numeral 210. Through this channel, the CPU 59 is notified of any failure of the echo cancellers 204 and 206. When the failure is on a specific communication line, the CPU commands the Expected Echo ALU 55 via alarms and echo suppressor control unit 216 to decrease the expected trans-hybrid loss input to an "Echo Suppressor Only" level, typically 0 - 6 dB. The expected transhybrid loss with an operative echo canceller is typically 26 dB.

When the failure of the echo canceller is total for all 24 lines processed by echo canceller 204 or 206, the Alarms and echo suppressor control unit 216 sends a command to Expected Echo ALU 55 to decrease the trans-hybrid loss on all even or odd lines accordingly.

Alarm outputs from echo cancellers 204 and 206 are provided via alarm and echo suppressor control circuitry 216 to CPU 59. Following such an alarm, the CPU 59 commands circuitry 216 to control multiplexers 212 and 214 to be operative in case of malfunction of the echo canceller to cause the echo canceller to be bypassed and to couple switch 16 directly to serial to parallel converter 18.

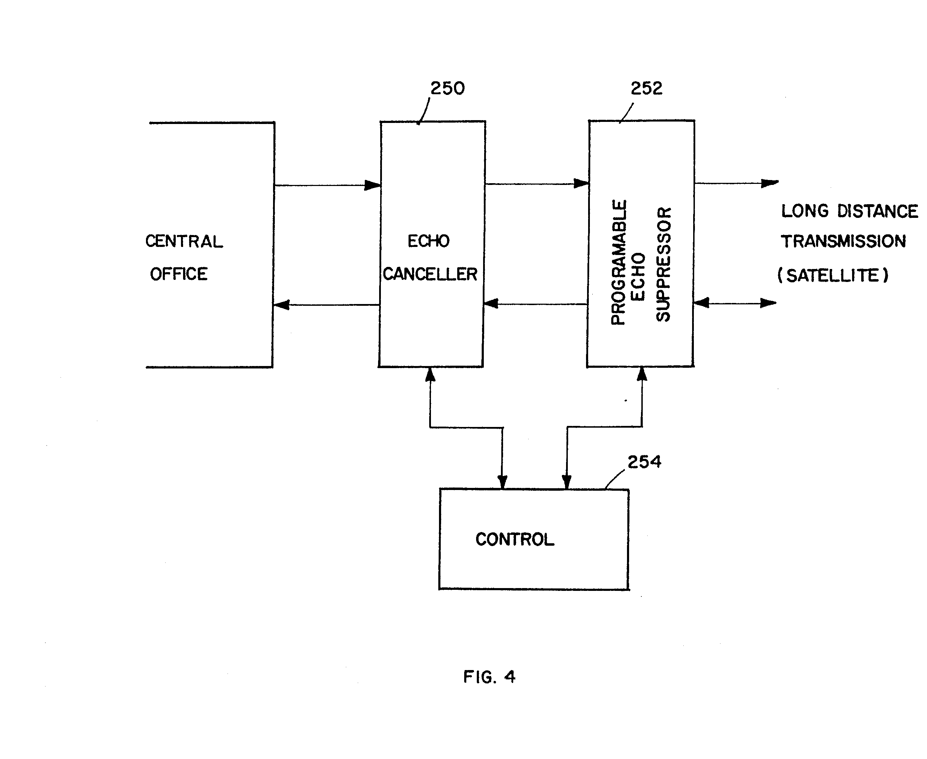

Reference is now made to Fig. 4 which illustrates the echo elimination circuitry of the present invention in the context of one end of a general telecommunications link. Here it is seen that an echo canceller 250 and a programmable echo suppressor 252 are connected to a central office and to an end of a long distance trunk and are interconnected by control circuitry 254 which coordinates the operation thereof in the same manner as described hereinabove in connection with the embodiment of Figs. 2 and 3. Briefly stated, the signals coming from the central office are processed by echo canceller 304 and the remainder of the echo in the signal processed by echo canceller 304 is eliminated by programmable echo suppressor 306. The control to \ the echo suppressor 252 is provided in accordance with the operational state of the echo canceller 250 in a manner described hereinabove.

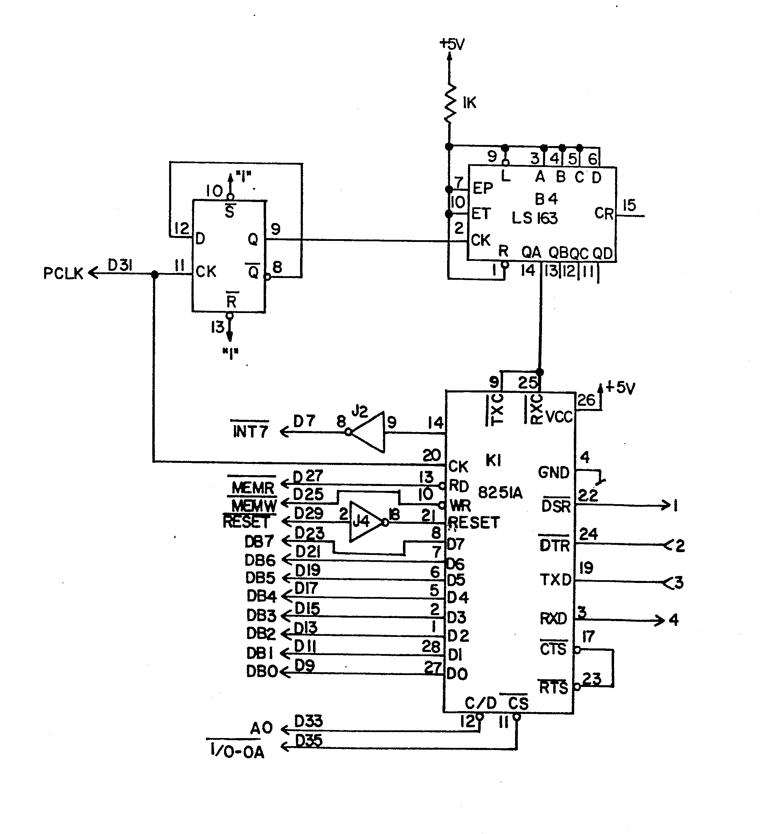

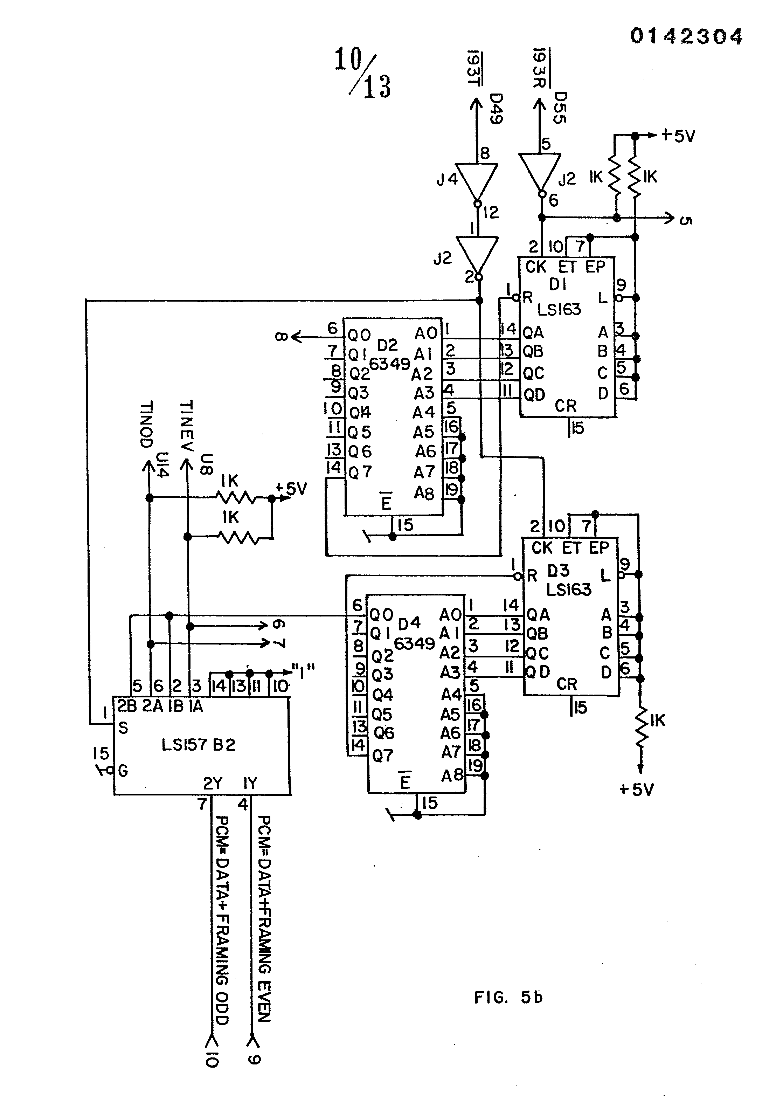

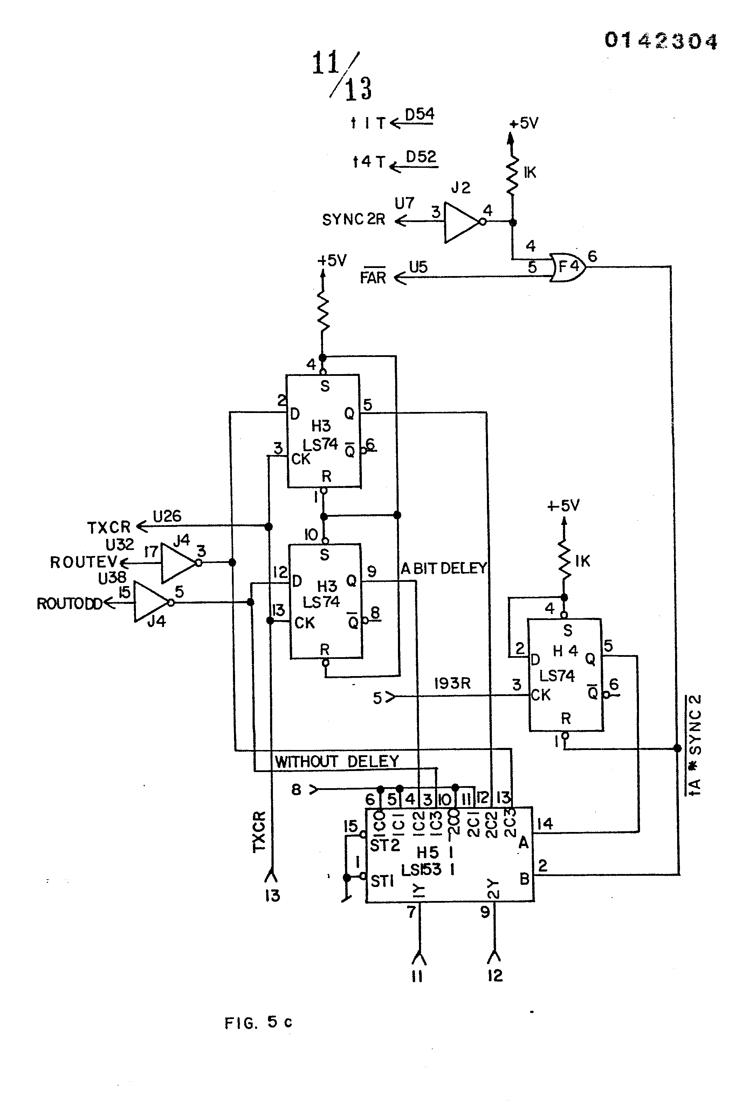

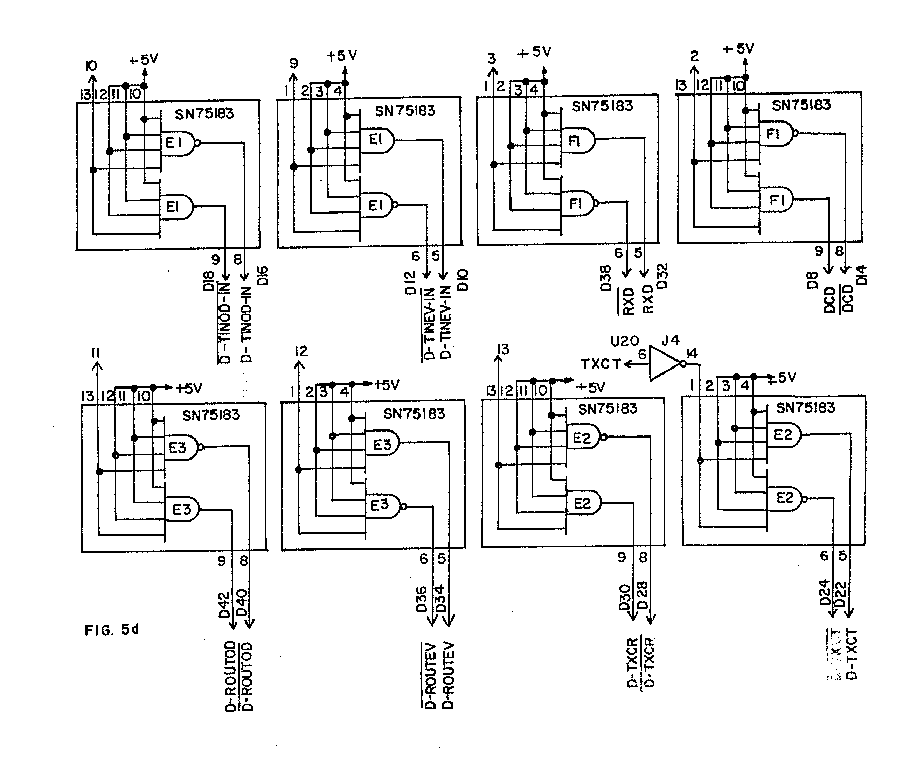

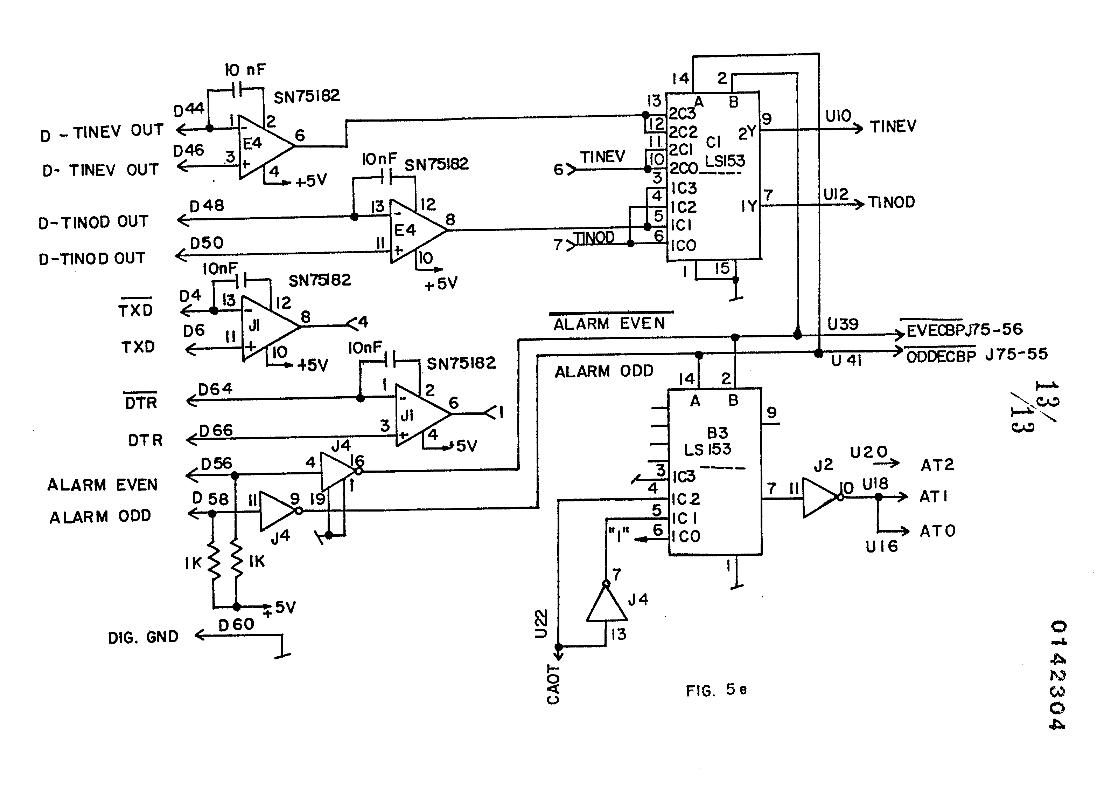

Reference is now made to Fig. 5 which is a schematic illustration of a preferred embodiment of the circuitry of Fig. 3 with the exception of echo cancellers 204 and 206. For the sake of conciseness, a written description of this circuitry is not provided since it is fully described in the drawing.

It will be appreciated by persons skilled in the art that the present invention is not limited by what has been particularly shown and described hereinabove. Rather the scope of the present invention is defined only by the claims which follow:

1.      Echo elimination apparatus comprising:

echo canceller means operative to receive a received signal indication and operative to modify a signal transmission in accordance with the received signal indication for providing echo cancellation, said echo canceller means being operative to provide a control output representative of the operational state of said echo canceller; and

variable threshold echo suppressor means receiving the modified signal transmission from said echo canceller means and said control output and being operative to provide echo suppression in accordance with a threshold determined by said control output.

2.      Apparatus according to claim 1 and wherein said variable threshold echo suppressor means comprises comparator means which is operative to block transmission only when the received signal amplitude exceeds the transmitted signal by an amount which is determined by said control output.

3.      Apparatus according to either of the preceding claims and wherein said variable threshold echo suppressor comprises a syllabic echo suppressor.

4.      Apparatus according to any of the preceding claims and wherein said variable threshold echo suppressor comprises a PROM which stores the variable values of an exceedance threshold for said echo suppressor.

5.      Time assignment speech interpolation apparatus 0142304
for interconnecting a transmission trunk link having a plurality
of communications channels to a second plurality of telephone
communications lines, the second plurality exceeding the first
plurality, and comprising:

        transmission apparatus at a first end of the
transmission trunk link including means for detecting signals on
said second plurality of telephone communciations lines and means
for assigning each telephone line on which signals are present to
an available one of the first plurality of communications
channels;

        receiving apparatus at a second end of the transmission
link including means for assigning each of said first plurality
of communication channels carrying signals to a correspondign one
of said second plurality of communication channels carrying
signals to a corresponding one of said second plurality of
telephone communication lines in accordance with assignment
information received from said transmission apparatus; and

        apparatus for communicating messages including
assignment information between said transmission apparatus and
said receiving apparatus,

        said transmission apparatus comprising echo elimination
apparatus according to any of the preceding claims.

6.      Apparatus according to any of the preceding claims and
wherein said variable threshold echo suppressor means is
operative in response to the operational state of said echo
canceller means.

0142304

FIG. 1

FIG. 2a

FIG. 2 b

FIG. 2C

014230₄

FIG . 2d

RX ANALOG INPUT ( 24 TRUNKS )

FROM TI DIGITAL INPUT

5/13

0142304

FIG. 3a

FIG. 3b

250    252

CENTRAL
OFFICE

ECHO
CANCELLER

PROGRAMABLE
ECHO
SUPPRESSOR

LONG DISTANCE
TRANSMISSION
(SATELLITE)

254

CONTROL

FIG. 4

0142304

FIG. 5a

0142304

9/13

FIG. 5b

FIG. 5 c

FIG. 5d

FIG. 5e

13/13

0142304

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 754 105 (POSCHENRIEDER et al.) <br> * column 3, line 47 - column 4, line 34; figure 2 * | 1,2,6 | H 04 B 3/23 <br> H 04 B 3/20 |
| Y | | 5 | |
| E,P X | EP-A-0 112 523 (IBM) <br><br> * page 7, line 7 - page 8, line 18; figure 3 * | 1,6 | |
| A | US-A-4 005 277 (ARASEKI et al.) <br> * column 3, line 49 - column 5, line 15; figure 1 * | 1 | |
| A | US-A-4 282 411 (STEWART) <br> * column 5, lines 3-54; column 8, line 29 - column 9, line 54; figures 1,5 * | 1 | TECHNICAL FIELDS SEARCHED (Int. Cl.4) <br><br> H 04 B |
| A | US-A-3 882 458 (HOESCHELE, Jr. et al.) <br> * abstract * | 3 | |
| A | US-A-4 363 938 (DAABOUL et al.) <br> * column 4, lines 17-45; figure 1A * | 4 | |
| | -/- | | |

The present search report has been drawn up for all claims

| Place of search | Date of completion of the search | Examiner |
|---|---|---|
| THE HAGUE | 29-01-1985 | LUBERICHS A. |

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | FR-A-2 413 825 (STORAGE TECHNOLOGY CORP.) <br> * page 1, lines 14-30 * <br><br> ----- | 5 | |

TECHNICAL FIELDS SEARCHED (Int. Cl.4)

The present search report has been drawn up for all claims

| Place of search | Date of completion of the search | Examiner |
|---|---|---|
| THE HAGUE | 29-01-1985 | LUBERICHS A. |